# EUROPÄISCHE PATENTANMELDUNG

(11) **EP 1 321 680 A2**
(43) Veröffentlichungstag der Anmeldung: **25.06.2003**
(21) Anmeldenummer: 02027810.7
(22) Anmeldetag: 12.12.2002
(51) Int. Cl.: F04D 29/58, F04D 29/06, F04D 29/04, F04D 29/02, F04D 25/06, F01D 15/10, F04D 25/12, F01D 25/18

(54) **Stömungsmaschinen-Aggregat**

(30) Priorität: 22.12.2001 DE 10163950; 26.01.2002 DE 20201118 U
(71) Anmelder: Miscel Oy, 33230 Tampere (FI)
(72) Erfinder: Säiläkivi, Jaakko, 33500 Tampere (FI); Alamäki, Jarmo, 53200 Lappeenranta (FI)
(74) Vertreter: Lorenz, Werner, Dr.-Ing.

(57) **Zusammenfassung**

Ein Strömungsmaschinen-Aggregat ist mit den folgenden Merkmalen versehen:
Wenigstens ein beschaufeltes Laufrad (1) ist direkt gekoppelt an den Rotor (12) einer elektrischen Maschine, z.B. eines Elektromotors (10), so dass Laufrad und Rotor einer gemeinsamen Welle (2) zugeordnet sind. Die gemeinsame Welle (2) ist abgestützt mittels einer ersten Lagerbaugruppe (21), die am einen Ende des Rotors (12) zwischen einem Laufradgehäuse (3,4) und dem Rotor angeordnet ist, sowie mittels einer zweiten Lagerbaugruppe, die am anderen Ende des Rotors angeordnet ist. Zumindest die erste Lagerbaugruppe ist mit einer Kühlflüssigkeits-Schmierung (27,28,29,37) ausgerüstet.

## Beschreibung

Die Erfindung betrifft ein Strömungsmaschinen-Aggregat, z.B. einen Turbokompressor für Gase (kurz "Gaskompressor" genannt) oder eine Gasturbine, mit den im Oberbegriff des Anspruchs 1 angegebenen Merkmalen.

Danach handelt es sich um eine Strömungsmaschine, deren Schaufelrad oder "Laufrad" für den Betrieb in einem extrem hohen Drehzahlbereich vorgesehen ist. Im Falle eines Gaskompressors dient als Antrieb ein Elektromotor, der mit einem hochfrequenten Strom gespeist wird, so dass dessen Drehzahl im Bereich zwischen 10.000 und 150.000 1/min liegt. Der Rotor dieses Elektromotors ist nun direkt (d.h. ohne Zwischenschaltung eines Getriebes) an das Kompressor-Laufrad gekoppelt. Somit rotieren beide mit der gleichen Drehzahl und der Aufwand für eine Getriebe wird vermieden. Günstig ist ferner die kompakte Bauweise eines solchen elektrisch angetriebenen Gaskompressors. Gleiches gilt für eine Gasturbine, deren Schaufelrad direkt an den Rotor eines Elektro-Generators gekoppelt ist.

Bei bekannten Gaskompressoren dieser Bauart (WO 94/05913 oder WO 99/31390) besteht eine wichtige Aufgabe darin, Öl als Schmiermittel für die Lager des Rotors zu vermeiden, um die Gefahr einer Verschmutzung des komprimierten Gases mit Öl auszuschließen. Deshalb sind bei diesen bekannten Gaskompressoren gasgeschmierte oder magnetische Lager vorgesehen. Solche Lager mögen brauchbar sein bei der Erzeugung von Druckluft, wenn deren Temperatur die Umgebungstemperatur nicht in gravierendem Maße übersteigt.

In manchen Fällen ist es jedoch erforderlich, ein Gas, z.B. Luft, mit stark erhöhter Temperatur (z.B. 200 oder 300 °C, im Extremfall bis ca. 1.200 °C) zu komprimieren oder zum Antrieb einer Gasturbine zu nutzen, die einen elektrischen Generator antreibt. In diesem Fall verbietet sicht nicht nur der Einsatz von ölgeschmierten Lagern (wegen Brandgefahr), sondern auch der Einsatz von Magnetlagern oder von gasgeschmierten Lagern, weil derartige Lager durch die hohe Temperatur rasch zerstört oder in ihrer Funktion zumindest geschwächt werden würden. Ein weiteres Problem besteht bei der eingangs beschriebenen kompakten Bauweise darin, dass die elektrische Maschine, z.B. der Elektromotor vor einer Wärmezufuhr aus dem Bereich des Laufradgehäuses geschützt werden muss.

Der vorliegenden Erfindung liegt die Aufgabe zugrunde, ein eine elektrische Maschine aufweisendes Strömungsmaschinen-Aggregat zu schaffen, das möglichst viele der nachfolgenden Forderungen erfüllt:
1. Wie beim Stand der Technik soll eine kompakte Bauweise vorgesehen werden, bei der das beschaufelte Laufrad und der Rotor der elektrischen Maschine einer gemeinsamen Welle zugeordnet sind, so dass ein Getriebe zwischen Rotor und Laufrad entfällt.
2. Das Strömungsmaschinen-Aggregat soll für das Verarbeiten, z.B. das Komprimieren, von_sehr heißen Gasen geeignet sein, bei Gas-Temperaturen bis hinauf in den Bereich von 1.200 °C, wobei die Gefahr einer Verschmutzung des Gases durch Öl eliminiert sein soll.
3. Obwohl somit das Laufradgehäuse im Betrieb eine sehr hohe Temperatur annehmen wird, soll trotz der beschriebenen kompakten Bauweise die Verwendung einer elektrischen Maschine für extrem hohe Drehzahlen (Bereich 10.000 bis 150.000 1/min) möglich sein, ohne dass deren Funktion durch die hohe Gastemperatur beeinträchtigt ist. Falls das Strömungsmaschinen-Aggregat als Gaskompressor ausgebildet ist, soll die Verwendung eines bekannten frequenzgesteuerten Elektromotors für die genannten extrem hohen Drehzahlen möglich sein.

Diese Aufgabe wird durch die im Anspruch 1 angegebenen Merkmale gelöst. Danach ist wie beim Stand der Technik vorgesehen, dass wenigstens ein beschaufeltes Laufrad (des Kompressors oder der Turbine) und der Rotor der elektrischen Maschine unmittelbar an eine gemeinsame Welle gekoppelt sind und dass sich an jedem Ende des Rotors eine Lagerbaugruppe befindet. Somit ist zumindest eine der beiden Lagerbaugruppen (nämlich die "erste Lagerbaugruppe") zwischen dem Rotor der elektrischen Maschine und dem wenigstens einen Laufrad angeordnet. Gemäß der Erfindung ist diese erste Lagerbaugruppe mit einer Kühlflüssigkeits-Schmierung ausgerüstet, wobei als Kühl- und Schmierflüssigkeit vorzugsweise Wasser oder eine Mischung aus Wasser und einem Zusatz vorgesehen ist.

Zwar ist die Verwendung von wassergeschmierten Lagern bei einem Turbokompressor schon bekannt aus DE-OS 3642121. Dort handelt es sich jedoch um einen AbgasTurbolader, der an einen Verbrennungsmotor gekoppelt ist. Ein wärmeempfindlicher Elektromotor ist dort nicht vorhanden. Abweichend von diesem Stand der Technik ist gemäß der Erfindung vorgesehen, dass die genannte erste Lagerbaugruppe eine Doppelfunktion ausübt. Sie dient nämlich nicht nur zur Abstützung der gemeinsamen Welle, sondern dank des Kühlflüssigkeits-Schmiersystems auch noch zur Wärmeisolation, so dass ein Wandern der extrem hohen Temperatur vom Laufradgehäuse zur elektrischen Maschine (z.B. Elektromotor) vollkommen oder nahezu vollkommen verhindert wird.

Dieses Ergebnis kann dadurch noch weiter verbessert werden, dass auch ein die erste Lagerbaugruppe abstützendes Gehäuseteil mittels der Kühl- und Schmierflüssigkeit (welche der ersten Lagerbaugruppe zugeführt wird) kühlbar und somit als ein Wärmeisolator ausgebildet ist.

Somit wird dank der Erfindung ein Strömungsmaschinen-Aggregat (z.B. ein Gaskompressor) in einer sehr kompakten Bauart geschaffen, das bei extrem hoher Drehzahl zum Verarbeiten (z.B. zum Komprimieren) sehr heißer Gase geeignet ist.

Vorzugsweise ist die Drehachse der gemeinsamen Welle horizontal angeordnet. Jedoch ist die Erfindung auch bei einem vertikal-achsigen Strömungsmaschinen-Aggregat anwendbar.

Jede der beiden Lagerbaugruppen umfasst ein Radiallager. Außerdem sind zwei Axiallager vorgesehen. Das eine Axiallager stützt die gemeinsame Welle in der einen Richtung, das andere Axiallager in der anderen Richtung. Vorzugsweise sind die zwei Axiallager zu beiden Seiten eines der zwei Radiallager angeordnet, so dass eine Radial-Axial-Lagerbaugruppe vorhanden ist. Diese kann (als "zweite" Lagerbaugruppe) an dem vom Kompressor-Laufrad entfernten Ende des Rotors angeordnet sein. Es ist aber auch möglich, die Radial-Axial-Lagerbaugruppe (als "erste" Lagerbaugruppe) zwischen dem Rotor der elektrischen Maschine und dem beschaufelten Laufrad anzuordnen.

Im übrigen wird die Bauart der Lager bestimmt durch die genannten extrem hohen Drehzahlen und durch die erfindungsgemäß vorgesehene Wasserschmierung. Bevorzugt werden segmentierte Gleitlagerelemente aus einem Werkstoff mit geringer Gleitreibung.

Ein wichtiger weiterführender Gedanke der Erfindung befasst sich mit dem Teilproblem, dass die Gefahr des Eindringens von Kühl- und Schmierflüssigkeit in den Innenraum der elektrischen Maschine mit Sicherheit vermieden werden muss. Hierzu wird der Innenraum mit Hilfe von "inneren" Wellendichtungen gegen die Lagerbaugruppen abgedichtet und außerdem an eine Druckluftquelle angeschlossen. Hierdurch wird dafür gesorgt, dass - je nach Höhe des im Innenraum herrschenden Luftdruckes - ein kleiner Teil der Luft an den inneren Wellendichtungen aus dem Innenraum entweicht, so dass ein Eindringen von Kühl- und Schmierflüssigkeit in den Innenraum der elektrischen Maschine mit Sicherheit vermieden wird.

In weiterer Ausgestaltung der Erfindung sind den Lagerbaugruppen sogenannte Lager-Wellendichtungen zugeordnet. Außerdem ist zwischen jeder inneren Wellendichtung und der benachbarten Lager-Wellendichtung ein Zwischenraum vorgesehen, der in Leitungsverbindung steht mit einem Auslasskanal für die Kühl- und Schmierflüssigkeit. Wenn nun an einer der inneren Wellendichtungen Luft aus dem Innenraum der elektrischen Maschine entweicht, so wird diese Luft durch den zuvor genannten Zwischenraum sowie durch den Auslasskanal nach außen abgeführt.

Wenn das erfindungsgemäße Strömungsmaschinen-Aggregat für das Arbeiten mit Gasen von besonders hoher Temperatur ausgestaltet werden soll, so wird man das Laufradgehäuse vorzugsweise mit einer Wärmeisolationsplatte ausrüsten, die man zwischen dem Laufrad und einem Gehäusedeckel anordnet, welcher der ersten Lagerbaugruppe zugewandt ist (Anspruch 12). Falls erforderlich, können zum Zwecke der Kühlung des Gehäusedeckels die in den Ansprüchen 13 und 14 angegebenen Maßnahmen getroffen werden.

In der Regel wird das erfindungsgemäße Strömungsmaschinen-Aggregat nur ein einziges beschaufeltes Laufrad aufweisen, das an einem der beiden Enden der gemeinsamen Welle angeordnet ist. Abweichend hiervon ist es jedoch auch möglich, an jedem der beiden Enden der gemeinsamen Welle ein beschaufeltes Laufrad mit einem Laufradgehäuse anzuordnen, beispielsweise wenn ein zweistufiger Gaskompressor oder eine zweistufige Gasturbine gefordert wird.

Einzelheiten der Erfindung werden nachfolgend anhand der Zeichnung beschrieben und zwar am Beispiel eines Gaskompressors; dieser kann jedoch auch als Gasturbine eingesetzt werden.
Die Figuren 1A und 1B, die zu einer einzigen Figur zusammenzusetzen sind, zeigen einen gemäß der Erfindung gestalteten Gaskompressor in einem Längsschnitt.
Die Figur 2 zeigt eine Alternative zu Figur 1A.
Die Figuren 3A und 3B zeigen weitere mögliche Ausgestaltungen der Erfindung.

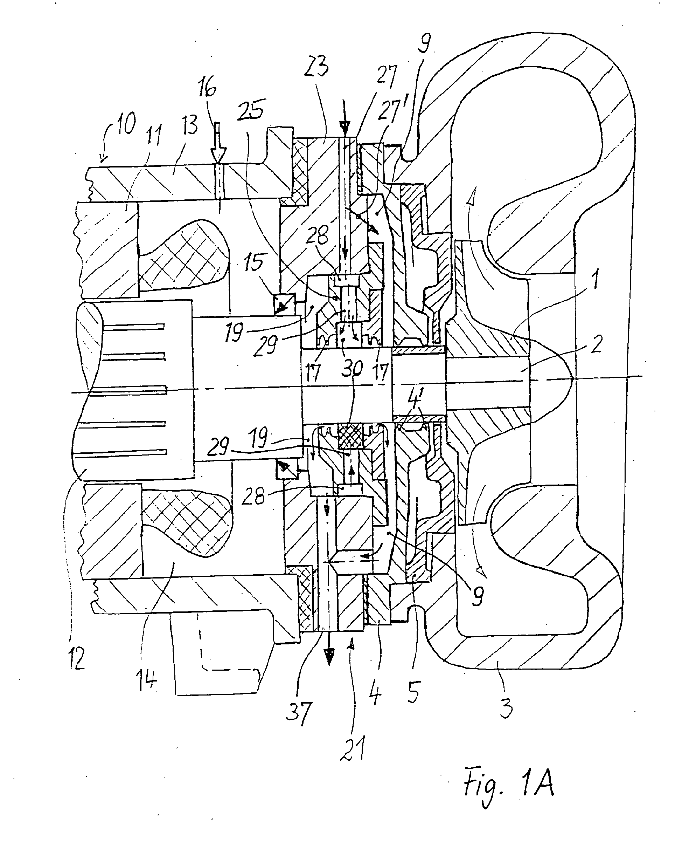

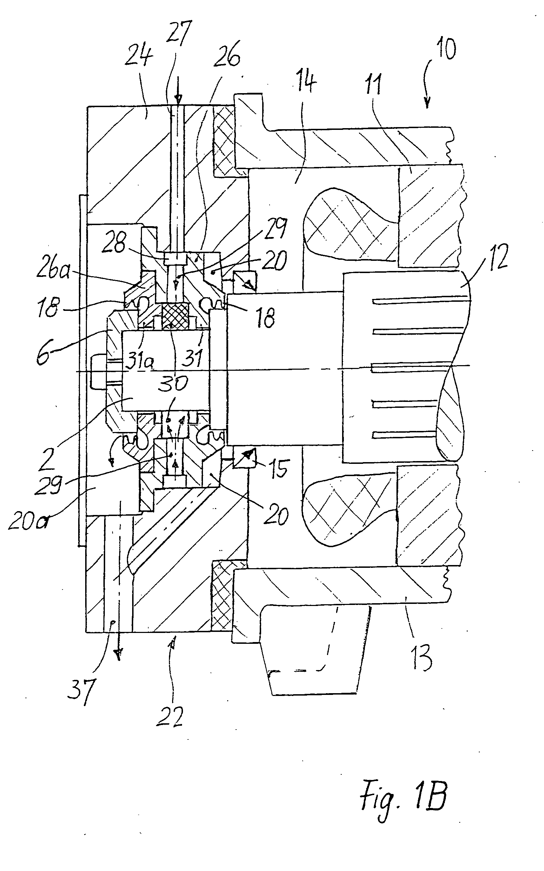

In den Figuren 1A und 1B ist ein Gaskompressor dargestellt mit einem Kompressor-Laufrad 1 und mit einem Rotor 12 eines Elektromotors 10. Laufrad 1 und Rotor 12 sind beide unmittelbar auf einer gemeinsamen Welle 2 befestigt, deren Drehachse vorzugsweise horizontal angeordnet ist. Der Elektromotor 10 ist ein Hochgeschwindigkeitsmotor für Drehzahlen zwischen 10.000 und 150.000 1/min. Sein Stator ist mit 11 und ein zylindrisches Gehäuseteil mit 13 bezeichnet. An jedem Ende des Gehäuseteils 13 ist für die Welle 2 eine Lagerbaugruppe 21 bzw. 22 befestigt. Eine "erste" Lagerbaugruppe 21 befindet sich zwischen dem Elektromotor 10 und den zum Kompressor-Laufrad 1 gehörenden Gehäuseteilen 3, 4, 5. Eine "zweite" Lagerbaugruppe 22 befindet sich am anderen Ende des Elektromotors 10.

Die erste Lagerbaugruppe 21 umfasst einen starr mit dem Gehäuseteil 13 verbundenen Lagerdeckel 23. Darin befindet sich ein inneres Lagergehäuse 25, in welchem mehrere Radial-Gleitlagersegmente 30 angeordnet sind. Diese tragen unmittelbar die drehbare Welle 2. Zur Schmierung des derart gebildeten Radiallagers ist im Lagerdeckel 23 eine radiale Zuführleitung 27 für Kühlund Schmierflüssigkeit vorgesehen; diese ist vorzugsweise eine Mischung aus Wasser und einem Zusatz. Die radiale Zuführleitung 27 mündet in einen Ringkanal 28, der sich in dem inneren Lagergehäuse 25 befindet. Von hier aus verlaufen mehrere radiale Verbindungskanäle 29 zu den Gleitlagerelementen 30 und zwischen diesen direkt zur Welle 2, um die aufeinander gleitenden Flächen zu schmieren und um die Welle 2 und die Gleitlagerelemente 30 zu kühlen.

Beidseitig der Gleitlagerelemente 30 sind am inneren Lagergehäuse 25 sogenannte Lager-Wellendichtungen 17 vorgesehen. Diese können z.B. als berührungslose Labyrinthdichtungen ausgebildet sein. Außerdem trägt der Lagerdeckel 23 motorseitig eine innere Wellendichtung 15, mit deren Hilfe der Motor-Innenraum 14 gegen die Lagerbaugruppe 21 abgedichtet ist. Zwischen der inneren Wellendichtung 15 und dem inneren Lagergehäuse 25 befindet sich ein Zwischenraum 19. Ferner ist ein Zwischenraum 9 vorgesehen zwischen der Lagerbaugruppe 21 und dem Deckel 4 des Kompressorgehäuses 3, 4, 5. Die genannten Zwischenräume 9 und 19 stehen in unmittelbarer Leitungsverbindung mit einem Auslasskanal 37 für die Kühl- und Schmierflüssigkeit. Diese strömt nach dem Erreichen der Gleitlagerelemente 30 entlang der Welle 2, also vorbei an den Labyrinthdichtungen 17 in die Zwischenräume 9 und 19; sie verlässt dann die Lagerbaugruppe 21 durch den Auslasskanal 37. Sie dient hierbei nicht nur als Lagerschmiermittel sondern auch zur Kühlung der gesamten Lagerbaugruppe 21. Die Lagerbaugruppe 21 dient somit zugleich als Wärme-Isolator, welcher der Gefahr des Wärmeübergangs vom Kompressorgehäue 3, 4, 5 zum Elektromotor 10 begegnet. Falls erforderlich, kann von der Zuführleitung 27 zum Zwischenraum 9 eine. Zweigleitung 27' vorgesehen werden, durch die - zur zusätzlichen Kühlung des Kompressor-Gehäusedeckels 4 - Kühl- und Schmierflüssigkeit unmittelbar in den Zwischenraum 9 gelangt.

Um das Eindringen von Kühl- und Schmierflüssigkeit in den Motor-Innenraum 14 zu verhindern, kann man in den Motor-Innenraum 14 (bei 16) Druckluft zuführen. Dies hat zur Folge, dass sich eine schwache Luftströmung, vorbei an der Wellendichtung 15, vom Motor-Innenraum 14 in den Zwischenraum 19 einstellt. Diese Luftströmung verhindert eine entgegengerichtete Strömung von Flüssigkeit aus dem Zwischenraum 19 in den Motor-Innenraum 14.

Zwischen dem Gehäusedeckel 4 des Kompressor-Gehäuses und der Welle 2 sind Dichtungselemente 4' vorgesehen. Zwischen dem Spiralgehäuseteil 3 und dem Gehäusedeckel 4 ist eine Wärmeisolationsplatte 5 angeordnet.

Gemäß Figur 1B befindet sich am anderen Ende des Elektromotors 10 eine zweite Lagerbaugruppe 22. Diese umfasst wiederum einen Lagerdeckel 24 (mit Wellendichtung 15) sowie mit Zuführleitung 27 und Auslasskanal 37 für die Kühl- und Schmierflüssigkeit. Ferner ist ein zweiteiliges inneres Lagergehäuse 26, 26a vorgesehen wiederum zur Aufnahme von segmentierten Radial-Gleitlagerelementen 30. Außerdem sind schematisch angedeutete (vorzugsweise ebenfalls segmentierte) Axiallagerelemente 31, 31a vorgesehen, welche die Welle 2 in Axialrichtung führen, einerseits (bei 31) durch direkten Kontakt mit der Welle 2, andererseits (bei 31a) durch Kontakt mit einem an die Welle 2 angeschraubten Teller 6. Die Kühl- und Schmierflüssigkeit strömt wiederum vom Zuführkanal 27 durch einen Ringkanal 28 und mehrere radiale Kanäle 29 zu den Lagerelementen 30, 31 und 31a, danach von hier, vorbei an Labyrinthdichtungen 18, in den Zwischenraum 20 bzw. in einen äußeren Sammelraum 20a und durch den Auslasskanal 37 nach außen.

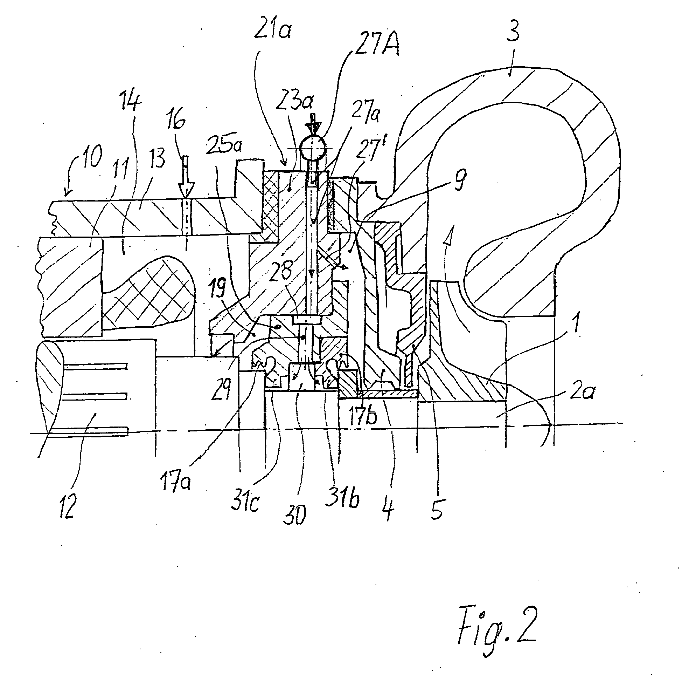

Abweichend von den Figuren 1A und 1B kann die zuletzt beschriebene kombinierte Radial- und Axial-Lagerbaugruppe gemäß Figur 2 auch zwischen dem Kompressorgehäuse 3, 4, 5 und dem Elektromotor 10 angeordnet werden. Diese Lagerbaugruppe ist in Figur 2 mit 21a bezeichnet. Zu ihr gehören ein Lagerdeckel 23a, ein zweiteiliges inneres Lagergehäuse 25a mit Labyrinthdichtungen 17a und 17b sowie mit Axialgleitlagerelementen 31c und 31b, zwischen denen wiederum die Radial-Gleitlagerelemente 30 angeordnet sind. Die Führung der Kühl- und Schmierflüssigkeit entspricht derjenigen gemäß den Figuren 1A und 1B. Jedoch kann zur verbesserten Kühlung des Lagerdeckels 23a folgendes vorgesehen werden: Im Lagerdeckel 23a sind (gleichmäßig verteilt) mehrere radiale Zuführleitungen 27a vorgesehen, die alle aus einem ringförmigen Zuführkanal 27A mit Kühl- und Schmierflüssigkeit gespeist werden. Eine oder mehrere Zweigleitungen 27' kann bzw. können wiederum vorgesehen werden, um eine verbesserte Kühlung des Gehäusedeckels 4 zu bewirken.

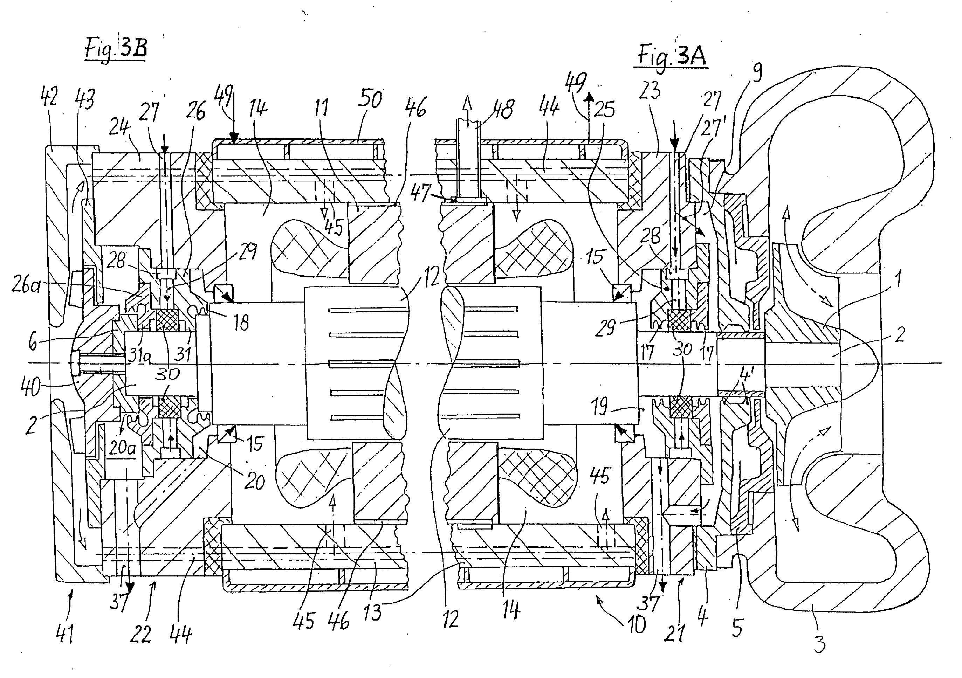

Die Figuren 3A und 3B entsprechen weitgehend den Figuren 1A und 1B. Abweichend von den letzteren ist in den Fig. 3A, 3B folgendes vorgesehen:
Außer dem oben genannten Teller 6 ist an die Welle 2 das Laufrad 40 eines Kühlluftgebläses 41 (mit zweiteiligem Gebläsegehäuse 42,43) gekoppelt. Um die Kühlluft unter Druck in den Motorinnenraum 14 zu leiten, sind in den Gehäuseteilen 24 und 13 Längskanäle 44 und Radialbohrungen 45 vorgesehen. Die Luft erwärmt sich u.a. beim Durchströmen von Kühlluftkanälen, z.B. Nuten 46, die außen am Stator 11 vorgesehen sind. Von hier gelangt die Luft über einen Ringkanal 47 und einen Auslasskanal 48 nach außen. Zusätzlich kann um das Motorgehäuse 13 ein (über Leitungen 49) mit Wasser beschickbarer Kühlmantel 50 vorgesehen werden.

## Patentansprüche

1. Strömungsmaschinen-Aggregat mit den folgenden Merkmalen:
a) wenigstens ein beschaufeltes Laufrad (1) ist direkt gekoppelt an den Rotor (12) einer elektrischen Maschine, z.B. eines Elektromotors (10), so dass Laufrad und Rotor einer gemeinsamen Welle (2) zugeordnet sind;
b) die gemeinsame Welle (2) ist abgestützt mittels einer ersten Lagerbaugruppe (21), die am einen Ende des Rotors (12) zwischen einem Laufradgehäuse (3,4) und dem Rotor angeordnet ist, sowie mittels einer zweiten Lagerbaugruppe (22), die am anderen Ende des Rotors angeordnet ist;
**dadurch gekennzeichnet, dass**
c) zumindest die erste Lagerbaugruppe (21) mit einer Kühlflüssigkeits-Schmierung (27,28,29,37) ausgerüstet ist.

2. Strömungsmaschinen-Aggregat nach Anspruch 1,
**dadurch gekennzeichnet, dass**
auch die zweite Lagerbaugruppe (22) mit einer Kühlflüssigkeits-Schmierung ausgerüstet ist.

3. Strömungsmaschinen-Aggregat nach Anspruch 1 oder 2,
**dadurch gekennzeichnet, dass**
als Kühl- und Schmierflüssigkeit Wasser oder eine Mischung aus Wasser mit einem Zusatz vorgesehen ist.

4. Strömungsmaschinen-Aggregat nach einem der Ansprüche 1 bis 3,
**dadurch gekennzeichnet, dass**
die erste Lagerbaugruppe (21) und ein diese abstützendes Gehäuseteil (23) als ein Wärme-Isolator ausgebildet sind, der mittels der Kühl- und Schmierflüssigkeit kühlbar ist.

5. Strömungsmaschinen-Aggregat nach einem der Ansprüche 1 bis 4,
**dadurch gekennzeichnet, dass**
die Drehachse der gemeinsamen Welle (2) horizontal angeordnet ist.

6. Strömungsmaschinen-Aggregat nach einem der Ansprüche 1 bis 5,
**dadurch gekennzeichnet, daß**
die erste Lagerbaugruppe (21) ein Radiallager (30) aufweist und dass die zweite Lagerbaugruppe (22) ein Radiallager (30) und eine Axiallagerung (31,31a) umfasst (Fig. 1A,B).

7. Strömungsmaschinen-Aggregat nach einem der Ansprüche 1 bis 5,
**dadurch gekennzeichnet, dass**
die erste Lagerbaugruppe (21a) ein Radiallager (30) und eine Axiallagerung (31b,31c) umfasst und dass die zweite Lagerbaugruppe ein Radiallager aufweist (Fig.2).

8. Strömungsmaschinen-Aggregat nach einem der Ansprüche 1 bis 7,
**dadurch gekennzeichnet, dass**
zumindest die Radiallager (30), vorzugsweise auch die Axiallager (31,31a,31b,31c) als Segment-Gleitlager ausgebildet sind, deren Gleitlager-Elemente zumindest an ihren Gleitflächen aus einem Werkstoff mit geringer Gleitreibung gebildet sind, z.B. aus einem Elastomer oder Verbundwerkstoff.

9. Strömungsmaschinen-Aggregat nach einem der Ansprüche 1 bis 8,
**dadurch gekennzeichnet, dass**
ein die elektrische Maschine (10) umhüllendes Gehäuse (13,23,24) einen Innenraum (14) begrenzt, der mit Hilfe von "inneren" Wellendichtungen (15) gegen die Lagerbaugruppen (21 und 22) abgedichtet ist.

10. Strömungsmaschinen-Aggregat nach Anspruch 9,
**dadurch gekennzeichnet, dass**
der Innenraum (14) an eine Quelle für Druckluft oder ein ähnliches Gas angeschlossen ist.

11. Strömungsmaschinen-Aggregat nach Anspruch 9 oder 10,
**dadurch gekennzeichnet, dass**
den Lagerbaugruppen (21 und 22) Lager-Weilendichtungen (17,18) zugeordnet sind und dass die inneren Wellendichtungen (15) in einem Abstand von den Lager-Wellendichtungen (17,18) angeordnet sind, so dass Zwischenräume (19,20) vorhanden sind, die in Leitungsverbindung stehen mit einem Auslasskanal (37) für die Kühl- und Schmierflüssigkeit.

12. Strömungsmaschinen-Aggregat nach einem der Ansprüche 1 bis 11,
**dadurch gekennzeichnet, dass**
das Laufradgehäuse (3,4) eine Wärmeisolationsplatte (5) aufweist, angeordnet zwischen dem Laufrad (1) und einem Gehäusedeckel (4), welcher der ersten Lagerbaugruppe (21,21a) zugewandt ist.

13. Strömungsmaschinen-Aggregat nach Anspruch 12,
**dadurch gekennzeichnet, dass**
zwischen der ersten Lagerbaugruppe (21,21a) und dem Gehäusedeckel (4) ein Zwischenraum (9) vorhanden ist, der in Leitungsverbindung steht mit einem Auslasskanal (37) für die Kühl- und Schmierflüssigkeit.

14. Strömungsmaschinen-Aggregat nach Anspruch 13,
**dadurch gekennzeichnet, dass**
der Zwischenraum (9) in Leitungsverbindung (27') steht mit einer Zuführleitung (27) für Kühl- und Schmierflüssigkeit.

15. Strömungsmaschinen-Aggregat nach einem der Ansprüche 1 bis 14,
**dadurch gekennzeichnet, dass**
an jedem Ende der gemeinsamen Welle ein beschaufeltes Laufrad mit einem Laufradgehäuse angeordnet ist.

16. Strömungsmaschinen-Aggregat, das als Gaskompressor mit einem Elektromotor ausgebildet ist, nach einem der Ansprüche 1 bis 15,
**dadurch gekennzeichnet, dass**
der Elektromotor (10) als ein Hochgeschwindigkeitsmotor ausgebildet ist für Drehzahlen zwischen 10.000 und 150.000 1/min.

17. Strömungsmaschinen-Aggregat nach einem der Ansprüche 1 bis 16,
**dadurch gekennzeichnet, dass**
am Rotor (12) ein Kühlluftgebläse (41) angekoppelt ist, welches Kühlluft über Kanäle (44,45) dem Innenraum (14) der elektrischen Maschine (10) zuführt (Fig. 3B).

18. Strömungsmaschinen-Aggregat nach Anspruch 17,
**dadurch gekennzeichnet, dass**
die elektrische Maschine (10) im Bereich zwischen Gehäuse (13) und Stator (11) Kühlluftkanäle (46) aufweist, die mit der Außenluft kommunizieren, z.B. mittels Ringkanal (47) und Auslasskanal (48).

19. Strömungsmaschinen-Aggregat nach einem der Ansprüche 1 bis 18,
**dadurch gekennzeichnet, dass**
das Gehäuse (13) der elektrischen Maschine (10) einen mit Kühlflüssigkeit beschickbaren Kühlmantel (50) aufweist (Fig. 3A,3B).

20. Strömungsmaschinen-Aggregat nach einem der Ansprüche 1 bis 19,
**dadurch gekennzeichnet, dass**
das Laufrad (1) und sein Gehäuse (3,4) für den wahlweisen Einsatz des Aggregates als Gaskompressor oder als Gasturbine ausgebildet sind.
